# FASCICULE DE BREVET EUROPEEN

(11) **EP 3 912 065 B1**
(45) Date de publication et mention de la délivrance du brevet: **25.02.2026**
(21) Numéro de dépôt: 20705408.1
(22) Date de dépôt: 07.01.2020
(51) Int. Cl.: G06F 21/51, G06F 21/57

(54) **AUTORISATION DU CHARGEMENT D'UNE APPLICATION DANS UN ÉLÉMENT DE SÉCURITÉ**
AUTORISIERUNG DES LADENS EINER ANWENDUNG IN EIN SICHERHEITSELEMENT
AUTHORIZATION OF LOADING AN APPLICATION IN A SECURITY ELEMENT

(30) Priorité: 14.01.2019 FR 1900300
(43) Date de publication de la demande: 24.11.2021
(73) Titulaire: Orange, 92130 Issy-les-Moulineaux (FR)
(72) Inventeur: BANDIN, Stéphane, 92326 CHÂTILLON CEDEX (FR)
(86) Numéro de dépôt international: PCT/FR2020/050017
(87) Numéro de publication internationale: WO 2020/148492

(56) Documents cités:
- CN-A- 107 944 261
- CN-A- 107 944 262
- KR-B1- 101 243 988
- US-A1- 2018 352 044

## Description

### 1. Domaine de l'invention

L'invention concerne un élément de sécurité. Elle s'applique en particulier à un élément de sécurité apte à télécharger des applications sur un réseau de communications.

### 2. Art Antérieur

Le transfert de données entre une machine distante et un élément de sécurité, comme par exemple une carte à puce, est le plus souvent sécurisé par des mécanismes cryptographiques. Ces mécanismes, qu'ils soient symétriques ou asymétriques, permettent de garantir la confidentialité et l'intégrité des données échangées, créant ainsi un canal de communication sécurisé entre la machine distante et l'élément de sécurité.

L'établissement d'un canal de communication sécurisé, qui permet en outre d'identifier l'émetteur des données, est une preuve de confiance jugée suffisante entre les deux parties ; par conséquent, le destinataire ne contrôle pas la nature des données avant d'en accepter la réception.

Il en résulte que l'émetteur est en mesure d'utiliser le canal de communication sécurisé pour envoyer des données, notamment des applications, qui peuvent être indues.

Dans un domaine autre que le domaine technique de la demande, le document CN107944261A1 (GUANGDONG et al) divulgue un procédé de contrôle d'application et un équipement utilisateur. Le procédé de contrôle d'application comprend les étapes suivantes : l'équipement utilisateur détecte une instruction de téléchargement déclenchée par un utilisateur pour une application cible et détermine une balise de l'application cible en fonction de l'instruction de téléchargement, la balise de l'application cible étant utilisée pour déterminer la catégorie à laquelle appartient l'application cible; l'équipement utilisateur acquiert un niveau de contrôle de l'application cible en fonction de la catégorie à laquelle appartient l'application cible, juge si le niveau de contrôle de l'application cible est égal ou non à un niveau de contrôle cible et interdit le téléchargement de l'application cible si tel est le cas. Les applications devant être téléchargées peuvent ainsi être contrôlées efficacement.

### 3. Exposé de l'invention

L'invention vient améliorer l'état de la technique.

Elle propose à cet effet un procédé d'autorisation du chargement d'une application dans un élément de sécurité selon la revendication 1.

Avantageusement, selon l'invention, une application est chargée dans l'élément de sécurité seulement si une information de vérification a permis de la valider. L'information de vérification étant fonction du type de l'application à charger, un fournisseur, même fiable, ne peut pas charger une application non souhaitée dans l'élément de sécurité.

Par « application » on entend ici un ensemble de données (actives, comme des codes informatiques ou passives, comme des données de toute nature, y compris des clés cryptographiques) destinées à être utilisées ensuite sur l'élément de sécurité. L'application est associée à un « type », qui correspond par exemple à une catégorie d'applications (télécommunications, identité, droits numériques, objets connectés, paiement, etc.). L'application peut prendre en particulier la forme d'un programme informatique et de données associées ; le programme informatique peut comprendre des éléments de système d'exploitation.

Par « élément de sécurité » on entend tout élément matériel et/ou logiciel assurant la sécurité des données en conformité avec les règles et les exigences de sécurité fixées par une autorité de confiance, par exemple une carte à puce, une carte SIM (pour *Subscriber Identity Module)* ou l'une quelconque de leurs évolutions : eSIM (embedded SIM), UICC (pour *Universal Integrated Circuit Card),* eUICC (pour *embedded UICC)* ou une architecture de type SSP (pour *Smart Secure Platform)* en cours de définition à l'ETSI. On pourra se référer par exemple au document « SIM evolution » de M. Klaus Vedder (20TH SIGOS CONFERENCE FOR TELCO & DIGITAL EXPERIENCE - 9 - 11 July 2018 | Nuremberg) pour une présentation de cette architecture. Selon un autre exemple, l'architecture de l'élément de sécurité peut être de type TEE (pour *Trusted Execution Environnement),* c'est-à-dire une zone (mémoire) sécurisée et isolée d'autres environnements d'exécutions, située dans un dispositif (de type téléphone portable), garantissant que des données sensibles sont stockées, traitées et protégées dans un environnement de confiance.

Par « fournisseur d'applications » on entend une entité qui met à disposition une ou plusieurs applications pour l'élément de sécurité, comme par exemple un opérateur de réseau mobile (aussi appelé MNO), un représentant d'un état fournissant des applications d'identité, une banque fournissant des applications de paiement, etc. Le fournisseur d'application est identifié de manière unique par un identifiant comme par exemple une URI (pour *Universal Resource Identifier),* une chaîne de caractères, une suite de chiffres, etc.

Selon l'invention, un procédé tel que décrit ci-dessus est en outre caractérisé en ce que l'élément de sécurité est accessible à au moins un utilisateur identifié par un identifiant d'utilisateur, le type d'application autorisée est relatif audit utilisateur et le procédé comporte une étape d'obtention dudit identifiant d'utilisateur.

Ce mode de mise en œuvre de l'invention permet de contrôler le chargement des applications pour un utilisateur donné, lorsque l'élément de sécurité est associé à un ou plusieurs utilisateurs qui disposent de droits sur cet élément, notamment le droit d'utiliser les ressources de cet élément de sécurité pour une application ou un service donné. Ils sont dotés d'un identifiant d'utilisateur, comme par exemple un nom, un numéro, une chaîne de caractères, une URI, etc. Le type d'application autorisé étant relatif à un utilisateur particulier, on s'assure ainsi que chaque utilisateur peut bénéficier de manière sécurisée du chargement de ses propres applications.

Selon un mode de mise en œuvre particulier de l'invention, un procédé tel que décrit ci-dessus est en outre caractérisé en ce qu'il comporte une étape d'obtention d'un identifiant du fournisseur de l'application à charger et en ce que l'information de vérification est calculée en fonction dudit identifiant du fournisseur.

Ce mode de mise en œuvre de l'invention permet notamment de renforcer la validation du chargement par l'introduction d'un identifiant du fournisseur dans le calcul de la donnée de validation, qui permet d'écarter des fournisseurs non autorisés. Avantageusement, si l'information de validation est établie en combinant identifiant du fournisseur et type d'application autorisée, on pourra refuser de charger une application dont le type n'est pas autorisé pour un fournisseur donné, et éventuellement pour un utilisateur donné.

Selon un mode de mise en œuvre particulier de l'invention, un procédé tel que décrit ci-dessus est caractérisé en ce qu'il comporte en outre :
- une étape de comparaison de l'identifiant du fournisseur de l'application à charger et de l'identifiant de l'utilisateur ;
- en fonction des résultats de la comparaison, une étape de refus du chargement de l'application.

Ce mode de mise en œuvre de l'invention permet de renforcer la sécurité de la vérification en comparant l'identifiant du fournisseur avec celui de l'utilisateur de l'élément de sécurité. Ainsi, par exemple, si les deux entités sont de type « banque », le chargement pourra-t-il être accepté, mais si l'une des entités n'est pas une banque, on aboutira au refus de chargement de l'application.

Selon un autre mode particulier de réalisation de l'invention, le procédé d'autorisation est en outre caractérisé en ce qu'un identifiant dudit utilisateur et au moins un type d'application autorisée pour ledit utilisateur sont enregistrés sous forme d'un certificat dans une mémoire de l'élément de sécurité.

Avantageusement selon ce mode, un certificat électronique peut être utilisé pour transmettre les données à l'élément de sécurité. Un tel certificat, utilisé pour identifier et authentifier une personne, mais aussi pour chiffrer des échanges, peut correspondre à une norme bien connue de l'homme du métier (comme par exemple la norme X509).

L'invention concerne également un dispositif d'autorisation du chargement d'une application dans un élément de sécurité selon la revendication 5.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

L'invention concerne également une carte électronique comportant un tel dispositif d'autorisation.

L'invention concerne également une zone mémoire sécurisée comportant un tel dispositif d'autorisation.

L'invention concerne également un programme d'ordinateur comportant des instructions pour la mise en œuvre du procédé ci-dessus selon l'un quelconque des modes particuliers de réalisation décrits précédemment, lorsque ledit programme est exécuté par un processeur. Le procédé peut être mis en œuvre de diverses manières, notamment sous forme câblée ou sous forme logicielle. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le programme d'ordinateur peut être stocké sur un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

Ce dispositif d'autorisation et ce programme d'ordinateur présentent des caractéristiques et avantages analogues à ceux décrits précédemment en relation avec le procédé d'autorisation. Les caractéristiques optionnelles évoquées pour le procédé peuvent s'appliquer au dispositif et au programme.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[Fig 1] La figure 1 illustre un exemple d'environnement de mise en œuvre de l'invention selon un mode particulier de réalisation de l'invention,
[Fig 2] La figure 2 illustre des étapes du procédé d'autorisation de chargement d'une application selon un mode particulier de réalisation de l'invention,
[Fig 3] La figure 3 illustre un dispositif configuré pour mettre en œuvre le procédé d'autorisation de chargement selon un mode particulier de réalisation de l'invention.
[Fig 4] La figure 4 illustre un dispositif configuré pour mettre en œuvre le procédé d'autorisation de chargement selon un autre mode particulier de réalisation de l'invention.

### 5. Description d'un mode de réalisation de l'invention

### 5.1 Principe général de l'invention

Le procédé décrit ici propose une méthode de vérification de la nature des données constitutives d'une application au sein d'un élément de sécurité (ES) avant d'en accepter la réception. Chaque utilisateur de l'élément de sécurité doit préalablement être enregistré via un identifiant, ainsi que la liste des types d'applications pour lesquelles cet utilisateur autorise le téléchargement, dans une mémoire de l'ES. Avant le téléchargement, le type de l'application est vérifié par l'élément de sécurité. Avantageusement, un émetteur/fournisseur n'est donc plus en mesure d'utiliser le canal de communication, même sécurisé, pour envoyer des données indues.

### 5.2 Modes particuliers de réalisation de l'invention.

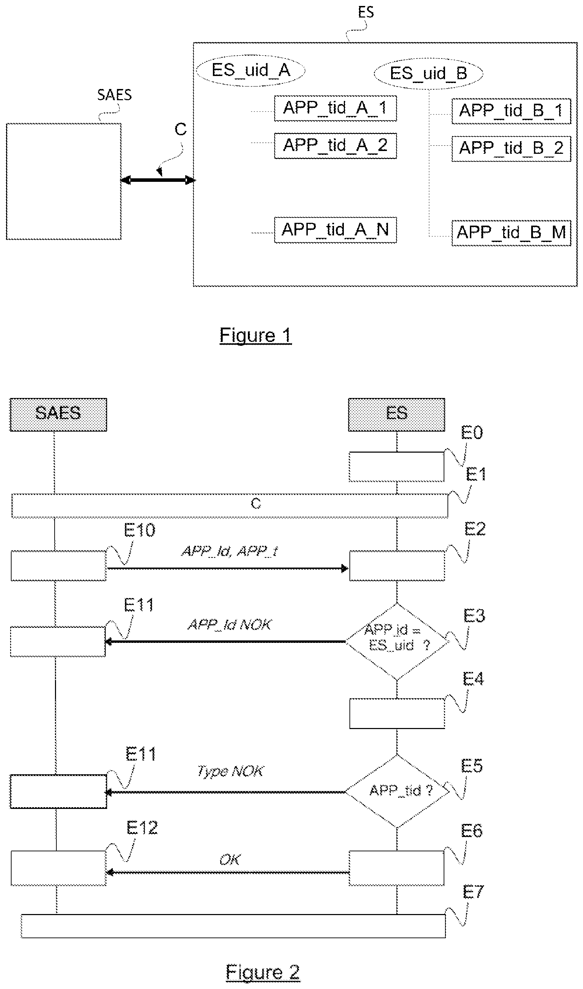

La **figure 1** illustre un exemple d'environnement de mise en œuvre de l'invention selon un mode particulier de réalisation, dans le contexte d'un téléchargement d'une application (APP) depuis une machine distante, ou serveur d'applications pour élément de sécurité (SAES), vers un élément de sécurité (ES).

Selon ce mode de réalisation, l'élément de sécurité ES possède au moins un utilisateur doté d'un identifiant noté ES_uid. Cet utilisateur définit le(s) type(s) d'applications qu'il autorise à être téléchargé(s) sur l'ES. Il peut y avoir plusieurs utilisateurs d'un même ES, comme représenté à la figure 1, où l'ES possède deux utilisateurs A et B (ES_uid_A et ES_uid_B). L'élément de sécurité peut être intégré par exemple dans un dispositif comme un smartphone. Il peut être matériel, ou logiciel, ou une combinaison des deux.

Le serveur d'applications communique avec l'Élément de sécurité (ES) pour télécharger une application (APP) à travers le canal de communication C.

Selon un mode particulier de réalisation de l'invention, le canal de communication C est sécurisé, par exemple par l'utilisation de clés cryptographiques.

L'application à télécharger (APP) est associée à un fournisseur et dispose d'un type ; on note APP_id l'identifiant du fournisseur d'applications et APP_t le type de l'application. APP_t peut être utilisé par un ou plusieurs fournisseurs.

On note APP_tid l'identifiant représentant le type d'applications APP_t proposé par le fournisseur APP_id ; par exemple, si APP est l'application de fidélité du marchand xyz, APP_id *(id=xyz)* est l'identifiant de ce marchand, APP_t correspond au type « applications de fidélité » et APP_tid_A est le type « applications de fidélité » du marchand xyz pour le client A

Selon un mode particulier de réalisation de l'invention, la valeur APP_tid est composée en combinant la valeur d'APP_id et d'APP_t.

Selon un mode particulier de réalisation de l'invention : l'application APP est une application d'identité électronique ; un type d'application APP_t est un type d'application d'identité (passeport, permis de conduire...) ; un fournisseur est un état ou un représentant d'un état (ANSSI en France ou le BSI en Allemagne) représenté dans l'ES par un ES_uid ; plusieurs états peuvent s'entendre pour utiliser les mêmes valeurs d'APP_t, ne dépendant pas d'APP_id du fournisseur (un citoyen franco-allemand peut avoir un passeport de chacun des deux pays). La mise en œuvre de l'invention dans ce contexte permet de garantir que seul l'état français est en mesure de télécharger les applications d'identité françaises et n'est pas en mesure de télécharger les applications d'identité d'un autre état.

La **figure 2** illustre des étapes du procédé de chargement d'une application selon un mode particulier de réalisation de l'invention

L'étape E0 correspond à une étape d'initialisation. Elle peut être réalisée à n'importe quel moment (initialisation de la carte, ou personnalisation ultérieure par l'utilisateur, etc.). Pour chaque utilisateur de l'ES, les informations qui suivent sont enregistrées dans la mémoire de l'ES :
- Un identifiant unique ES_uid de l'utilisateur. Selon un mode particulier de réalisation, la valeur d'ES_uid est égale à la valeur d'APP_id ;
- La liste des APP_tid, c'est -à-dire, la liste des types d'applications pour lesquelles le téléchargement est autorisé par l'utilisateur.

Selon un mode de réalisation particulier, ces informations sont mémorisées dans un certificat électronique (Cert), comportant par exemple les informations suivantes :
- L'identifiant de l'émetteur du certificat (par exemple : urn:xyz.com). Cet identifiant joue alors le rôle de ES_uid.
- La liste des APP_tid, c'est-à-dire la liste des types d'applications pour lesquelles le téléchargement est autorisé par l'utilisateur de l'ES pour un fournisseur donné.

Lors d'une étape **E1,** le serveur et l'élément de sécurité, SAES et ES établissement un canal de communication C.

Selon un mode particulier de réalisation de l'invention, ce canal de communication est sécurisé par l'utilisation de certificats électroniques à clé publique, comme présenté auparavant.

Lors d'une étape **E10,** le serveur SAES envoie sur le canal de communication C l'identifiant du fournisseur (APP_id) et le type d'application (APP_t) d'une application APP à télécharger, reçues lors d'une étape E2.

Lors d'une étape **E3** facultative, l'élément de sécurité ES vérifie que le fournisseur de cette application est bien autorisé. Selon un mode de réalisation, il compare la valeur d'APP_id reçue aux valeurs d'ES_uid enregistrées :
- Si la valeur d'APP_id ne correspond à aucune valeur d'ES_uid enregistrée, ES répond à SAES que APP_id n'est lié à aucun utilisateur enregistré pour cet ES ; ES n'accepte pas le téléchargement d'APP. Ceci permet d'éviter qu'un fournisseur d'application utilise indûment l'élément de sécurité. Par exemple, si l'ES_uid vaut lambda (e.g. telco pour un opérateur de télécommunications) mais l'App_id est associé à une banque, cette étape échoue car l'utilisateur lambda (le telco) n'est pas en mesure de charger une application bancaire.
- Si la valeur d'APP_id correspond à une valeur d'ES_uid enregistrée, le traitement se poursuit.

Selon un mode particulier de réalisation de l'invention présenté auparavant, selon lequel le canal de communication est sécurisé par l'utilisation de certificats électroniques à clé publique, l'identifiant de l'émetteur du certificat (ES_uid) est extrait du certificat.

Puis lors d'une étape **E4,** l'élément de sécurité ES obtient une information de validation, notée APP'_tid à partir du type d'application APP_t, ou selon un mode de réalisation préféré, en combinant les informations envoyées par le serveur SAES, APP_id et APP_t.

Selon un mode particulier de réalisation de l'invention, APP_tid est calculé selon le procédé décrit dans la spécification IETF RFC 4122: "A Universally Unique IDentifier (UUID) URN Namespace" ; un tel identifiant est aussi connu sous la dénomination « UUID version 5 », où NID (Namespace Identifier) est égal à APP_id et NSS (Namespace Specific String) est égal à APP_t.

Selon un autre mode de réalisation particulier de l'invention, ce traitement peut être confié à une entité externe par l'élément de sécurité.

Lors d'une étape **E5,** l'élément de sécurité ES compare la valeur d'APP'_tid calculée ou obtenue à l'étape précédente aux valeurs d'APP_tid enregistrées pour l'utilisateur ES_uid ; si la valeur d'APP'_tid ne correspond à aucune valeur d'APP_tid enregistrées pour l'utilisateur ES_uid, ES répond au serveur SAES que le type d'application n'est pas autorisé par l'utilisateur ; ES n'accepte pas le téléchargement de l'application APP.

Lors d'une étape **E6**, si la valeur d'APP'_tid correspond à une valeur d'APP_tid enregistrée pour l'utilisateur ES_uid, ES indique à SAES que le téléchargement d'APP est autorisé.

Selon un mode particulier de réalisation de l'invention présenté auparavant, selon lequel le canal de communication est sécurisé par l'utilisation de certificats électroniques à clé publique, cette étape consiste à comparer la valeur d'APP'_tid calculée à l'étape E4 aux valeurs d'APP_tid extraites du certificat utilisé pour l'établissement du canal de communication, c'est-à-dire la liste des types d'applications pour lesquelles le téléchargement est autorisé par l'utilisateur de l'ES.

Lors d'une étape **E11,** le serveur SAES télécharge l'application APP sur l'élément de sécurité ES qui la reçoit au cours d'une étape E7.

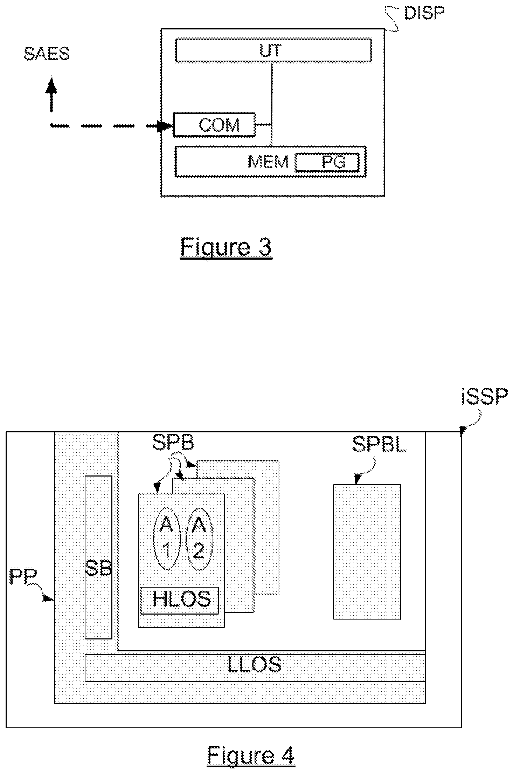

La **figure 3** illustre un dispositif DISP configuré pour mettre en œuvre le procédé de chargement selon un mode particulier de réalisation de l'invention.

Le dispositif DISP a l'architecture classique d'un élément de sécurité, et comprend notamment une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en œuvre les étapes du procédé de chargement tel que décrit précédemment, lorsque le programme est exécuté par le processeur PROC.

À l'initialisation, les instructions de code du programme d'ordinateur PG sont par exemple chargées dans la mémoire avant d'être exécutées par le processeur PROC. Le processeur PROC de l'unité de traitement UT met notamment en œuvre les étapes du procédé d'autorisation du chargement selon l'un quelconque des modes particuliers de réalisation décrits en relation avec la figure 2, selon les instructions du programme d'ordinateur PG.

Le dispositif DISP comprend un module de communication COM configuré pour établir des communications avec un réseau, par exemple IP, pour le téléchargement de l'application APP. L'application APP est chargée dans une partie de la mémoire M.

Selon un mode particulier de réalisation, un tel dispositif est une carte SIM.

Selon un mode particulier de réalisation, un tel dispositif est un TEE (pour Trusted Execution Environnement) tel qu'évoqué plus haut.

Selon un autre mode particuliers de réalisation, représenté à la **figure 4****,** un tel dispositif est une plateforme sécurisée de type iSSP *(pour integrated Smart Secure Platform)* telle que définie notamment dans la norme en cours d'élaboration de l'organisme ETSI, de référence TS 103 666-2, intitulée : « Smart Secure Platform (SSP); Integrated SSP (iSSP) characteristics *».* Cette évolution des éléments sécurisés répond à de nouvelles exigences fonctionnelles et sécuritaires de l'élément de sécurité (SE) permettant, entre autre, la gestion multi-applicative, l'optimisation des architectures logicielles et hardwares, la réduction des coûts d'intégration et des capacités de stockage sécurisé accrues, etc.

L'architecture hardware et logicielle d'une iSSP, tel que représenté à la figure 4, est découpée en trois parties : une plateforme primaire *(Primary Platform* - PP) composée du hardware lui-même (processeurs, mémoires, etc.) ainsi que d'un système d'exploitation bas niveau (LLOS) et de services de base (SB) , par exemple de communication ; des plateformes secondaires *(Secondary Platform Bundles -* SPB) composés d'un système d'exploitation de haut niveau (HLOS) et d'une famille d'applications notées A1, A2, etc. (par exemple : relatives à l'USIM, l'identité, etc. de l'utilisateur) ; d'un module de chargement *(Secondary Platform Bundle Loader -* SPBL), SPB particulier permettant de gérer les autres SPB (chargement, activation...). Dans ce contexte, l'invention s'applique au mécanisme de téléchargement d'applications de type « Secondary Platform Bundle » (SPB) : le procédé d'autorisation du chargement d'une application, tel que décrit plus haut, est mis en œuvre par les éléments matériels et logiciels de l'iSSP de telle manière qu'une famille ou un ensemble d'applications (SPB) peut être chargé dans la mémoire de l'iSSP par le chargeur (SPBL) après vérification de son type, et éventuellement de son fournisseur, pour un utilisateur donné.

Selon un mode de réalisation, l'iSSP contient un certificat d'une autorité de certification (par exemple la GSMA, une association internationale d'opérateurs de téléphonie mobile) qui contient les types de famille d'applications (SPB) autorisées à être téléchargées ; par exemple les SPB Telecom, SPB Paiement, SPB Identité, etc. On notera que plusieurs autorités (GSMA, banque, état-nation, etc.), plusieurs utilisateurs, et plusieurs familles d'applications peuvent coexister dans l'iSSP.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

## Revendications

1. Procédé mis en œuvre par un élément de sécurité apte à communiquer avec un serveur (SAES) de chargement d'applications, ledit élément de sécurité étant accessible à un utilisateur identifié via un identifiant utilisateur (ES-uid), ledit identifiant utilisateur étant enregistré dans une mémoire dudit élément de sécurité et ledit procédé comprenant:
- enregistrement, par ledit utilisateur, des types d'applications dont le téléchargement est autorisé relativement audit identifiant utilisateur, en association avec l'élément sécurisé ; - autorisation du chargement (E6) d'une application sur ledit élément de sécurité , pour ledit utilisateur dudit élément de sécurité, seulement en cas de correspondance entre au moins un des types d'application autorisés (APP_tid) enregistrés par et pour ledit utilisateur dudit élément de sécurité, et un type de ladite application à charger (APP_t).

2. Procédé selon la revendication 1 , dans lequel ledit procédé comporte une obtention (E2) d'un identifiant d'un fournisseur (APP_id) de l'application à charger et ladite autorisation tient compte dudit identifiant du fournisseur (APP_id).

3. Procédé selon la revendication 2, dans lequel ledit procédé comporte en outre :
- un refus (E3) du chargement de l'application en fonction dudit identifiant du fournisseur (APP_id) de l'application à charger et dudit identifiant utilisateur (ES_uid).

4. Procédé selon l'une des revendications 2 ou 3, dans lequel ledit identifiant utilisateur (ES_uid) et au moins un type d'application autorisée pour ledit identifiant utilisateur (APP_tid) sont enregistrées sous forme d'un certificat (Cert) dans ladite mémoire de l'élément de sécurité.

5. Dispositif d'autorisation du chargement d'une application (APP, SPB) dans un élément de sécurité (ES, iSSP) apte à communiquer avec un serveur (SAES) de chargement d'un fournisseur d'applications, ledit élément de sécurité étant accessible à un utilisateur identifié via un identifiant utilisateur (ES-uid), ledit identifiant utilisateur étant enregistré dans une mémoire dudit élément de sécurité, le dispositif comportant au moins un processeur adapté à :
- un enregistrement, par ledit utilisateur, des types d'applications dont le téléchargement est autorisé relativement audit identifiant utilisateur, en association avec l'élément sécurisé ;
- une autorisation du chargement (E6) d'une application sur ledit élément de sécurité, pour ledit utilisateur dudit élément de sécurité, seulement en cas de correspondance entre au moins un des types d'application autorisés (APP_tid) ) enregistrés par et pour ledit utilisateur dudit élément de sécurité, et un type de ladite application à charger (APP_t).

6. Dispositif selon la revendication 5, où ledit processeur est adapté à obtenir (E2) un identifiant d'un fournisseur (APP_id) de l'application à charger et où ladite autorisation tient compte dudit identifiant du fournisseur (APP_id).

7. Dispositif selon la revendication 6, ledit processur étant adapté à refuser (E3) un chargement de l'application en fonction dudit identifiant du fournisseur (APP_id) de l'application à charger et dudit identifiant utilisateur (ES_uid).

8. Dispositif selon la revendication 7, dans lequel ledit identifiant utilisateur (ES_uid) et au moins un type d'application autorisée pour ledit identifiant utilisateur (APP_tid) sont enregistrées sous forme d'un certificat (Cert) dans ladite mémoire de l'élément de sécurité.

9. Carte électronique (SIM, iSSP) comportant un dispositif d'autorisation selon l'une des revendications 5 à 8.

10. Zone mémoire sécurisée (TEE) comportant un dispositif d'autorisation selon l'une des revendications 5 à 8.

11. Programme d'ordinateur comportant des instructions pour la mise en œuvre du procédé selon l'une quelconque des revendications 1 à 4, lorsque le programme est exécuté par un processeur.

## Patentansprüche

1. Verfahren, das von einem Sicherheitselement implementiert wird, das in der Lage ist, mit einem Server (SAES) zum Laden von Anwendungen zu kommunizieren, wobei das Sicherheitselement für einen Benutzer zugänglich ist, der über eine Benutzerkennung (ES-uid) identifiziert wird, wobei die Benutzerkennung in einem Speicher des Sicherheitselements gespeichert ist, und wobei das Verfahren Folgendes umfasst:
- Speichern der Anwendungstypen durch den Benutzer, deren Download in Bezug auf die Benutzerkennung in Verbindung mit dem gesicherten Element autorisiert ist; - Autorisieren des Ladens (E6) einer Anwendung auf das Sicherheitselement, für den Benutzer des Sicherheitselements, nur im Fall einer Übereinstimmung zwischen mindestens einem der autorisierten Anwendungstypen (APP_tid), die von dem und für den Benutzer des Sicherheitselements gespeichert sind, und einem Typ der zu ladenden Anwendung (APP _t).

2. Verfahren nach Anspruch 1, wobei das Verfahren ein Erhalten (E2) einer Kennung eines Anbieters (APP_id) der zu ladenden Anwendung umfasst und die Autorisierung die Kennung des Anbieters (APP_id) berücksichtigt.

3. Verfahren nach Anspruch 2, wobei das Verfahren ferner Folgendes umfasst:
- ein Verweigern (E3) des Ladens der Anwendung in Abhängigkeit von der Kennung des Anbieters (APP_id) der zu ladenden Anwendung und von der Benutzerkennung (ES_uid).

4. Verfahren nach einem der Ansprüche 2 oder 3, wobei die Benutzerkennung (ES_uid) und mindestens ein für die Benutzerkennung (APP_tid) autorisierter Anwendungstyp in Form eines Zertifikats (Cert) in dem Speicher des Sicherheitselements gespeichert sind.

5. Vorrichtung zur Autorisierung des Ladens einer Anwendung (APP, SPB) in ein Sicherheitselement (ES, iSSP), das in der Lage ist, mit einem Server (SAES) zum Laden eines Anwendungsanbieters zu kommunizieren, wobei das Sicherheitselement für einen Benutzer zugänglich ist, der über eine Benutzerkennung (ES-uid) identifiziert wird, wobei die Benutzerkennung in einem Speicher des Sicherheitselements gespeichert ist, wobei die Vorrichtung mindestens einen Prozessor umfasst, der ausgelegt ist zu:
- einem Speichern der Anwendungstypen durch den Benutzer, deren Download in Bezug auf die Benutzerkennung in Verbindung mit dem gesicherten Element autorisiert ist;
- einem Autorisieren des Ladens (E6) einer Anwendung auf das Sicherheitselement, für den Benutzer des Sicherheitselements, nur im Fall einer Übereinstimmung zwischen mindestens einem der autorisierten Anwendungstypen (APP_tid), die von dem und für den Benutzer des Sicherheitselements gespeichert sind, und einen Typ der zu ladenden Anwendung (APP _t).

6. Vorrichtung nach Anspruch 5, wobei der Prozessor dazu ausgelegt ist, eine Kennung eines Anbieters (APP_id) der zu ladenden Anwendung zu erhalten (E2), und wobei die Autorisierung die Kennung des Anbieters (APP_id) berücksichtigt.

7. Vorrichtung nach Anspruch 6, wobei der Prozessor dazu ausgelegt ist, ein Laden der Anwendung in Abhängigkeit von der Kennung des Anbieters (APP_id) der zu ladenden Anwendung und von der Benutzerkennung (ES_uid) zu verweigern (E3).

8. Vorrichtung nach Anspruch 7, wobei die Benutzerkennung (ES_uid) und mindestens ein für die Benutzerkennung autorisierter Anwendungstyp (APP_tid) in Form eines Zertifikats (Cert) in dem Speicher des Sicherheitselements gespeichert sind.

9. Elektronische Karte (SIM, iSSP), die eine Vorrichtung zur Autorisierung nach einem der Ansprüche 5 bis 8 umfasst.

10. Gesicherter Speicherbereich (TEE), der eine Vorrichtung zur Autorisierung nach einem der Ansprüche 5 bis 8 umfasst.

11. Computerprogramm, das Anweisungen umfasst, die bei der Ausführung des Programms durch einen Prozessor das Verfahren nach einem der Ansprüche 1 bis 4 implementieren.

## Claims

1. Method implemented by a security element able to communicate with an application loading server (SAES), said security element being accessible to a user identified via a user identifier (ES-uid), said user identifier being recorded in a memory of said security element and said method comprising:
- said user registering the types of applications that are authorized to be loaded in relation to said user identifier, in association with the security element; - authorizing loading (E6) of an application onto said security element, for said user of said security element, only if at least one of the authorized types of application (APP_tid) registered by and for said user of said security element matches a type of said application to be loaded (APP_t).

2. Method according to Claim 1, wherein said method comprises obtaining (E2) an identifier of a provider (APP_id) of the application to be loaded, and said authorization takes into account said identifier of the provider (APP_id).

3. Method according to Claim 2, wherein said method furthermore comprises:
- declining (E3) to load the application on the basis of said identifier of the provider (APP_id) of the application to be loaded and of said user identifier (ES_uid).

4. Method according to either of Claims 2 and 3, wherein said user identifier (ES_uid) and at least one type of application authorized for said user identifier (APP_tid) are recorded in the form of a certificate (Cert) in said memory of the security element.

5. Device for authorizing loading of an application (APP, SPB) into a security element (ES, iSSP) able to communicate with a loading server (SAES) of an application provider, said security element being accessible to a user identified via a user identifier (ES-uid), said user identifier being recorded in a memory of said security element, the device comprising at least one processor designed to allow:
- said user to register the types of applications that are authorized to be downloaded in relation to said user identifier, in association with the security element;
- loading (E6) of an application onto said security element to be authorized, for said user of said security element, only if at least one of the authorized types of application (APP_tid)) registered by and for said user of said security element matches a type of said application to be loaded (APP_t).

6. Device according to Claim 5, wherein said processor is designed to obtain (E2) an identifier of a provider (APP_id) of the application to be loaded and wherein said authorization takes into account said identifier of the provider (APP_id).

7. Device according to Claim 6, said processor being designed to decline (E3) to load the application on the basis of said identifier of the provider (APP_id) of the application to be loaded and of said user identifier (ES_uid).

8. Device according to Claim 7, wherein said user identifier (ES_uid) and at least one type of application authorized for said user identifier (APP_tid) are recorded in the form of a certificate (Cert) in said memory of the security element.

9. Electronic card (SIM, iSSP) comprising an authorization device according to any of Claims 5 to 8.

10. Secure memory area (TEE) comprising an authorization device according to any of Claims 5 to 8.

11. Computer program comprising instructions for implementing the method according to any one of Claims 1 to 4 when the program is executed by a processor.
